# EUROPEAN PATENT SPECIFICATION

(11) **EP 3 988 224 B1**
(45) Date of publication and mention of the grant of the patent: **31.01.2024**
(21) Application number: 20827844.0
(22) Date of filing: 10.06.2020
(51) Int. Cl.: B21D 5/02, G05B 19/4093, B21D 5/00

(54) **PROCESSING ORDER DETERMINATION METHOD AND PROCESSING ORDER DETERMINATION DEVICE**
VERFAHREN ZUR BESTIMMUNG DER BEARBEITUNGSREIHENFOLGE UND VORRICHTUNG ZUR BESTIMMUNG DER BEARBEITUNGSREIHENFOLGE
PROCÉDÉ DE DÉTERMINATION D'ORDRE DE TRAITEMENT ET DISPOSITIF DE DÉTERMINATION D'ORDRE DE TRAITEMENT

(30) Priority: 18.06.2019 JP 2019112541
(43) Date of publication of application: 27.04.2022
(73) Proprietor: Amada Co., Ltd., Isehara-shi, Kanagawa 259-1196 (JP)
(72) Inventor: OYAMADA, Nobuo, Isehara-shi, Kanagawa 259-1196 (JP)
(74) Representative: Grünecker Patent- und Rechtsanwälte PartG mbB
(86) International application number: PCT/JP2020/022826
(87) International publication number: WO 2020/255821

(56) References cited:
- WO-A1-99/13387
- JP-A- H06 138 923
- JP-A- 2001 515 792
- JP-A- 2007 050 451
- US-B1- 6 341 243
- GUPTA S K ET AL: "Automated Process Planning for Sheet Metal Bending Operations", JOURNAL OF MANUFACTURING SYSTEMS, SOCIETY OF MANUFACTURING ENGINEERS, DEARBORN, MI, US, vol. 17, no. 15, 1 January 1998 (1998-01-01), pages 338-360, XP004144382, ISSN: 0278-6125

## Description

### Technical Field

The present disclosure relates to a processing order determination method and a processing order determination device.

### Background Art

A method of bending by using a bending machine such as a press brake is known. When a component to be processed is bent multiple times, the number of tools to be used can be reduced by referring to the information of the tools to be used for each bending and sharing the same tool or a compatible tool.

For example, it is assumed that the bending machine possesses three tools including two tools each having a tool length (divided length) of 100 mm and one tool having a tool length of 50 mm. It is assumed that a component having a bending line length of 150 mm and a component having a bending line length of 200 mm are respectively bent by this bending machine. When the component having a bending line length of 200 mm is bent on a tool stage in which the two tools of 100 mm are combined, and the component having a bending line length of 150 mm is bent on a tool stage in which the tool of 100 mm and the tool of 50 mm are combined, a total of four tools is used.

On the tool stage in which the two tools of 100 mm are combined, a component having a bending line length of 200 mm or less can be bent. When the component having a bending line length of 200 mm and the component having a bending line length of 150 mm are respectively bent on the tool stage in which the two tools of 100 mm are combined, a total of two tools is sufficient. Therefore, the number of tools to be used can be reduced by setting the tool stage in which the two tools of 100 mm are combined to process the component having a bending line length of 150 mm and the component having a bending line length of 200 mm, respectively.

Now, depending on the size of the bending machine, the number of components, or the like, it may not be possible to process all the components by one tool setup, and the tool setup may be divided into multiple setups. Here, the tool setup refers to one or more tool stages, which are set in the bending machine at the same time, combined into one.

For example, Patent Literature 1 discloses a method of detecting a setup change factor for a plurality of tool stages required for bending and dividing the plurality of tool stages into a plurality of tool setups according to the detection result. Further, Patent Literature 2, for example, also discloses a technique related to the tool setup.

### Citation List

### Patent Literature

Patent Literature 1: Japanese Patent Application Laid-Open Publication No. 2008-43969
Patent Literature 2: Japanese Patent Application Laid-Open Publication No. 2007-61879

### Summary

However, when a series of bending processes is performed by using a plurality of tool setups, it is necessary to perform a setup change in which a tool setup is changed by changing the tools. Depending on the processing order, this may deteriorate efficiency of the entire processing work.

The present disclosure has been made in view of such circumstances, and an object of the present disclosure is to provide a processing order determination method and a processing order determination device capable of improving efficiency of the entire processing work by optimizing the processing order of a series of bending processes using a plurality of tool setups.
WO 1999013387 A1 relates to performing multi-part setup planning for carrying out sheet metal operations, such as sheet metal bending operations.. A plurality of tool stages of the setup are chosen such that a plurality of components can processed with the same setup by combining the individual setups to a common setup.
"Automated Process Planning for Sheet Metal Bending Operations" from Gupta S K et al, JOURNAL OF MANUFACTURING SYSTEMS, SOCIETY OF MANUFACTURING ENGINEERS, DEARBORN, MI, US, vol. 17, no, 15, 1 January 1998, pages 338-360 relates to planning for robotic sheet metal bending press brakes. Once a CAD design is given for a new part, the system automatically determines the operation sequence, the tools and grippers needed, the necessary tool layout and the robot motion for making the part.
US 6341243 B1 relates to planning sheet metal bending. While a tooling stage is already setup, operations are planned concurrently for processing the sheet metal.

The invention is defined in the appended claims. The Second Embodiment in the following disclosure is according to the invention.

The first embodiment mentioned in the following disclosure is not falling within the scope of the appended claims and is only provided in the disclosure to better understand the invention.

[empty]

According to the present disclosure, the processing order of a series of bending processes using a plurality of tool setups can be optimized, and the efficiency of the entire processing work can be improved.

### Brief Description of Drawings

[Figure 1]

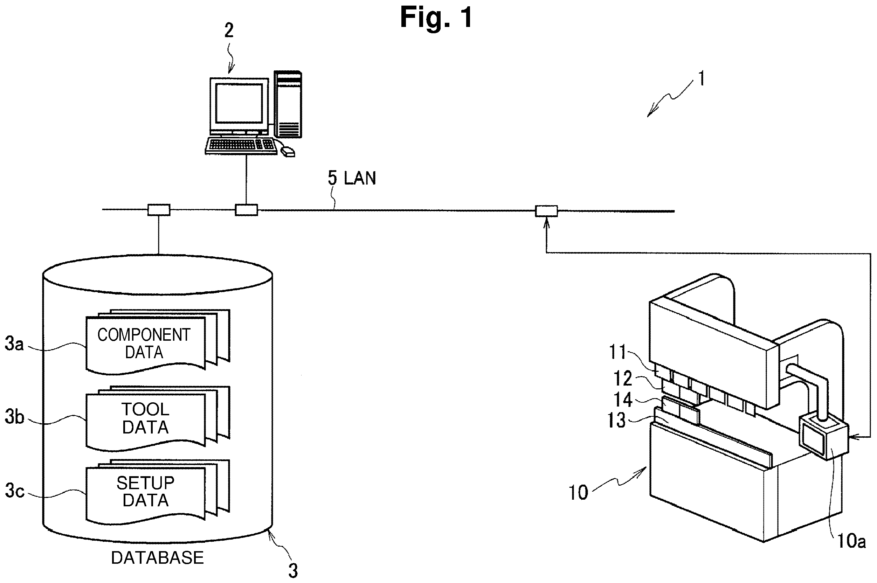

   Figure 1 is an explanatory diagram schematically showing a configuration of a bending system including a processing order determination device according to the present embodiment.
[Figure 2]

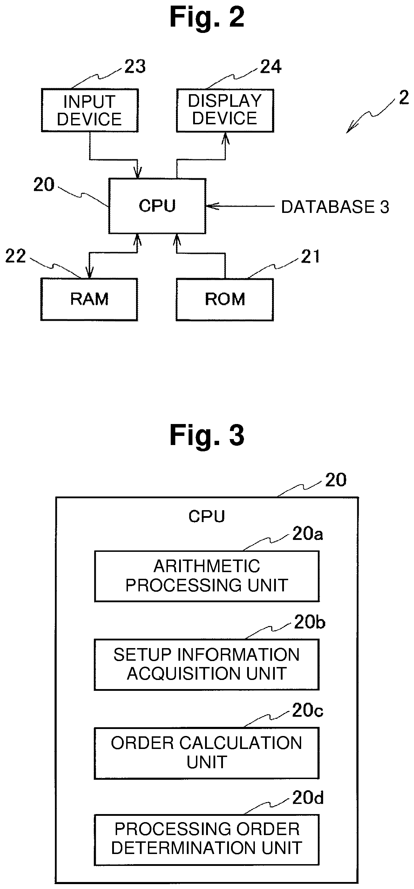

   Figure 2 is a block diagram showing a configuration of the processing order determination device according to the present embodiment.
[Figure 3]
   Figure 3 is an explanatory diagram showing an example of a functional configuration of a CPU.
[Figure 4]

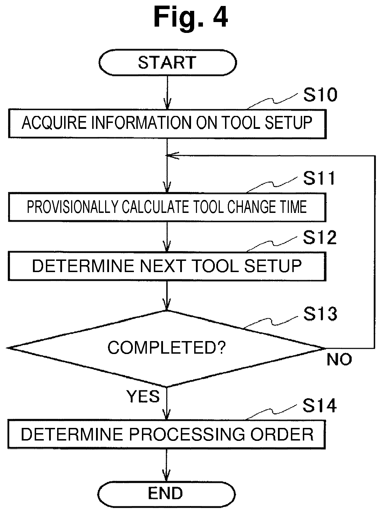

   Figure 4 is a flowchart showing a procedure for determining a processing order according to a first embodiment.
[Figure 5]

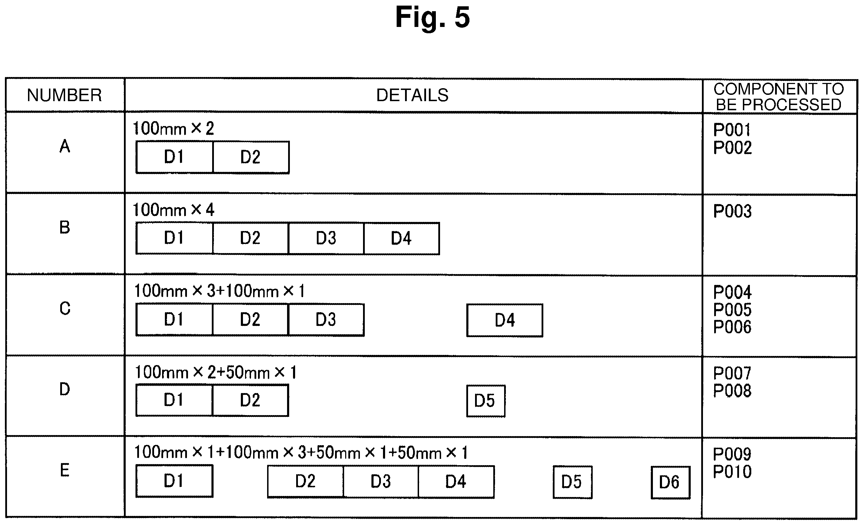

   Figure 5 is an explanatory diagram showing an outline of a tool setup.
[Figure 6]

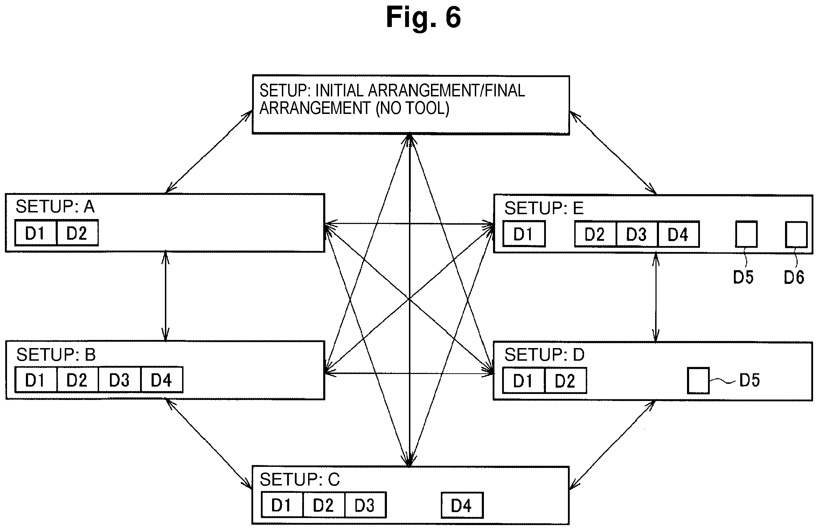

   Figure 6 is an explanatory diagram showing a concept of calculating a setup change order.
[Figure 7]

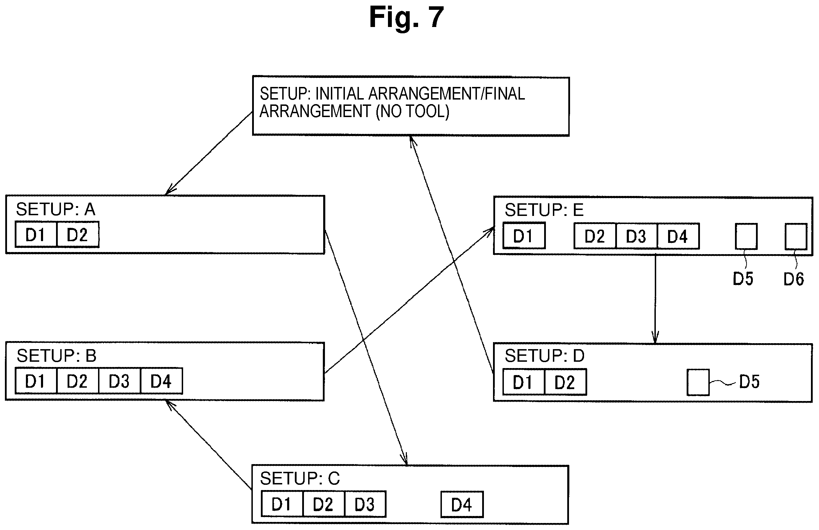

   Figure 7 is an explanatory diagram showing a calculation result of the setup change order.
[Figure 8]

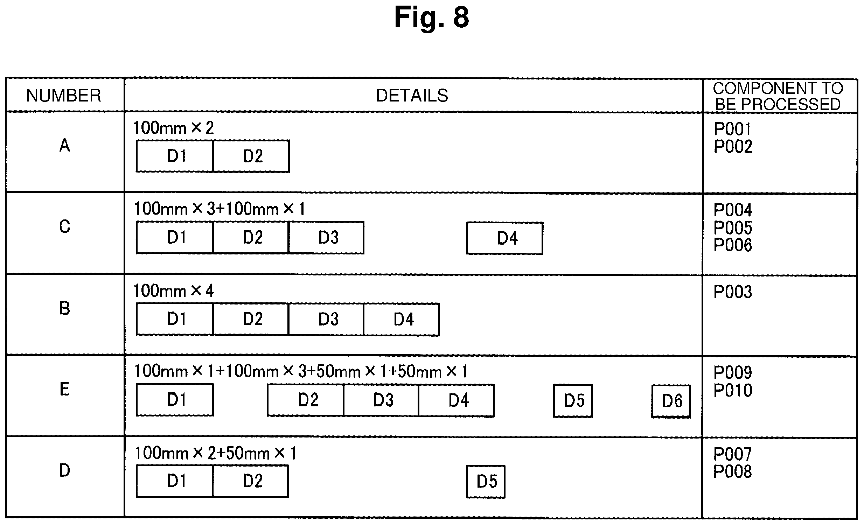

   Figure 8 is an explanatory diagram showing a processing order using a plurality of tool setups.
[Figure 9]

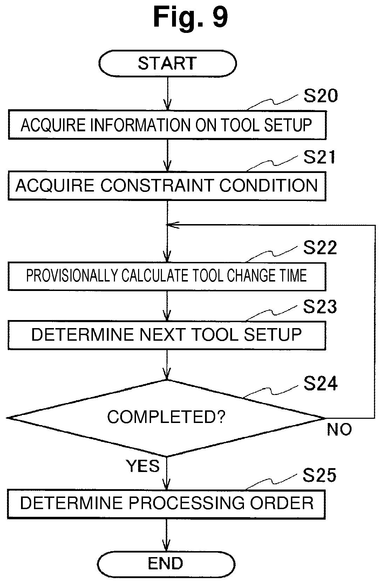

   Figure 9 is a flowchart showing a procedure for determining a processing order according to a second embodiment.
[Figure 10]

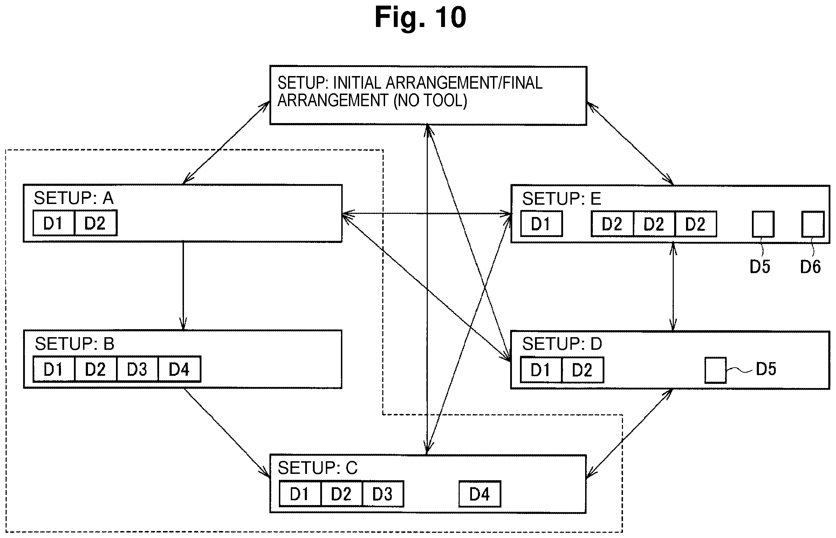

   Figure 10 is an explanatory diagram showing a concept of calculating the setup change order.

### Description of Embodiment

### (First Embodiment)

The processing order determination method and the processing order determination device according to the present embodiment will be described by applying a bending system. As shown in Figure 1, a bending system 1 includes a processing order determination device 2, a database 3, and a bending machine 10 such as a press brake. The processing order determination device 2, the database 3, and the bending machine 10 are connected to each other via a network such as a LAN 5 or a dedicated line.

The processing order determination device 2 determines a processing order of performing a series of bending processes by using the bending machine 10. Details of the processing order determination device 2 will be described later. It should be noted that the processing order determination device 2 may include the database 3, which is configured as an external device in Figure 1, as a part of its own configuration. Further, the function of the processing order determination device 2 may be executed by an NC device of the bending machine 10.

The database 3 stores data used by the processing order determination device 2 and the bending machine 10, and also stores data created by the processing order determination device 2. The database 3 stores component data 3a, tool data 3b, tool setup data 3c, and the like.

The component data 3a is data indicating information of a component, and is generated by a CAD or the like. The component data 3a includes information of a component such as a shape, a size, a bending position, a bending angle, a bending attribute value such as elongation due to bending, and the like. The component data 3a is prepared for each component.

The tool data 3b is data indicating information on tools in possession of the bending machine 10. The tool data 3b includes information such as a tool number, a divided length, and a tool shape of a punch and a die. The tool data 3b is prepared according to the number of tools in possession.

The tool setup data 3c is data indicating information on a tool setup, that is, data indicating one or more tool stages that are simultaneously set on the bending machine 10 among a plurality of tools in possession of the bending machine 10. Specifically, the tool setup data 3c includes information such as a setup number, a tool layout, a component to be processed, and the like. The tool layout includes a tool number, a divided length, a tool mounting position, and the like of a tool that constitutes each stage.

The one or more tool stages according to the tool setup are set in the bending machine 10. The bending machine 10 bends a component by collaboration of a punch 12 and a die 14 that are a tool. In the bending machine 10, the punch 12 is held by a punch holder 11 of an upper table configured to be vertically movable, and the die 14 is held by a die holder 13 of a lower table that is fixed.

The bending machine 10 is provided with an NC device 10a for controlling the bending machine 10. The bending machine 10 lowers the upper table under the control of the NC device 10a, and bends the component by the punch 12 and the die 14.

In the bending machine 10, a component is produced by bending a material such as a sheet metal. Bending is performed on each of a plurality of materials, and a plurality of components are produced by a series of bending processes.

The details of the processing order determination device 2 will be described with reference to Figure 2. The processing order determination device 2 is composed of a computer. The processing order determination device 2 includes a CPU 20, a ROM 21, and a RAM 22, and the ROM 21 and the RAM 22 are connected to the CPU 20, respectively. Further, the processing order determination device 2 includes an input device 23 such as a keyboard and a display device 24 such as a display. The input device 23 and the display device 24 are connected to the CPU 20, respectively. The database 3 is connected to the CPU 20.

In the processing order determination device 2, the CPU 20 reads out various programs according to processing contents from the ROM 21 or the like, loads the programs in the RAM, and executes the loaded programs to determine the processing order.

As shown in Figure 3, when viewed functionally, the CPU 20 includes an arithmetic processing unit 20a, a setup information acquisition unit 20b, an order calculation unit 20c, and a processing order determination unit 20d.

The arithmetic processing unit 20a creates a tool setup based on the component data 3a and the tool data 3b. The tool setup created by the arithmetic processing unit 20a is stored in the database 3 as the tool setup data 3c. The arithmetic processing unit 20a creates a plurality of tool setups based on a plurality of components to be bent. Specifically, the arithmetic processing unit 20a assumes that a series of bending processes is performed on a plurality of components, and create a plurality of tool setups such that the number of tools and the number of tool setups to be used are reduced. In the present embodiment, it is assumed that a process for one component is performed by one tool setup. Therefore, one tool setup is created for each component. The maximum number of tool setups matches the number of components, but the number of tool setups may be less than the number of components because some components may share the tool setup.

The arithmetic processing unit 20a creates a processing program based on the component data 3a and the tool data 3b. The processing program is bending data used for bending a component in the bending machine 10. The processing program created by the arithmetic processing unit 20a is stored in the database 3 (not shown).

The setup information acquisition unit 20b acquires information on the plurality of tool setups used for bending the plurality of components. The setup information acquisition unit 20b can acquire the information from the tool setup data of the database 3.

The order calculation unit 20c determines a setup change order of the plurality of tool setups based on a tool change time between the respective tool setups.

The processing order determination unit 20d determines the processing order based on the determined setup change order.

Hereinafter, the procedure for determining the processing order by the processing order determination device 2 will be described with reference to Figure 4. The procedure for determining the processing order is started when a user operates the input device 23 to execute a corresponding function.

First, in step S10, the setup information acquisition unit 20b acquires information on the tool setup. In the description below, as shown in Figure 5, it is assumed that five tool setups used for bending ten components P001 to P010 have been created.

A tool setup of a setup number A is composed of a tool stage in which two tools D1 and D2 each having a tool length of 100 mm are combined. This tool setup is used for bending the two components P001 and P002.

A tool setup of a setup number B is composed of a tool stage in which four tools D1 to D4 each having a tool length of 100 mm are combined. This tool setup is used for bending the one component P003.

A tool setup of a setup number C is composed of a tool stage in which three tools D1 to D3 each having a tool length of 100 mm are combined and a tool stage consisting of a tool D4 having a tool length of 100 mm. This tool setup is used for bending the three components P004 to P006.

A tool setup of a setup number D is composed of a tool stage in which two tools D1 and D2 each having a tool length of 100 mm are combined and a tool stage consisting of a tool D5 having a tool length of 50 mm. This tool setup is used for bending the two components P007 and P008.

A tool setup of a setup number E is composed of a tool stage consisting of a tool D1 having a tool length of 100 mm, a tool stage in which three tools D2 to D4 each having a tool length of 100 mm are combined, a tool stage consisting of a tool D5 having a tool length of 50 mm, and a tool stage consisting of a tool D6 having a tool length of 50 mm. This tool setup is used for bending the two components P009 and P010.

In steps S11 and S12, the order calculation unit 20c provisionally calculates the tool change time between the respective tool setups, and determines the setup change order of the five tool setups based on the tool change time between the respective tool setups. In the present embodiment, the order calculation unit 20c determines the setup change order such that a total of the tool change time required for all the setup changes is shortened. The order calculation unit 20c performs a calculation by using a well-known algorithm, for example, an A* (A-star) search algorithm. By this calculation, the setup change order of the five tool setups is determined, for example, in the order in which the setup number A is the first, the setup number B is the second, the setup number C is the third, the setup number D is the fourth, the setup number E is the fifth.

A specific calculation method will be described. In the description below, it is specified that in the initial arrangement of the tool setup and the final arrangement thereof, there is no tool, that is, no tool is attached to the bending machine 10.

First, the order calculation unit 20c provisionally selects a certain tool setup from among the tool setups for which the setup change order has not been determined. The order calculation unit 20c provisionally calculates the tool change time in which the setup change is performed from a state of the current tool setup (initial arrangement in the first processing) to the selected tool setup (step S11).

The tool change time is calculated based on a moving distance of the tool, a moving speed of the tool, and the like. When the tool change is performed automatically, the moving speed of the tool is obtained by a moving speed of a finger that performs the tool change, and the moving distance of the tool is obtained by a distance from a storage position of the tool to a mounting position of the tool in the bending machine 10. Further, when the tool change is performed manually, the movement speed of the tool is obtained by a system value empirically set through the tool change work, and the movement distance of the tool is obtained by the distance from the storage position of the tool to the mounting position of the tool in the bending machine 10.

As shown in Figure 6, the order calculation unit 20c sequentially selects the tool setups for which the setup change order has not been determined, and provisionally calculates a tool change time for each tool setup (step S11). Then, the order calculation unit 20c discovers the tool setup that makes the tool change time shortest based on the provisionally calculated tool change time, and determines this tool setup as the next (post-setup change) tool setup (step S12). As a result, the setup change order from the current tool setup to the next (post-setup change) tool setup is determined.

In step S13 of Figure 4, the order calculation unit 20c determines whether or not the ordering of the setup changes has been completed for all the tool setups. If the ordering is completed, an affirmative determination is made in step S13, and the process proceeds to step S14. On the other hand, if the ordering is not completed, a negative determination is made in step S13, and the process returns to step S11. Then, the order calculation unit 20c repeats the processing of steps S11 to S13 for the tool setup for which the setup change order has not been determined. As a result, as shown in Figure 7, the setup change order of the five tool setups is determined from the initial arrangement to the final arrangement.

In step S14 of Figure 4, the processing order determination unit 20d determines the processing order based on the setup change order determined by the order calculation unit 20c. This processing order is an order of bending the 10 components P001 to P010 by a series of bending processes using the five tool setups of the setup numbers A to E. As shown in Figure 8, the processing order is in accordance with the setup change order.

As described above, in the processing order determination method according to the present embodiment, the computer, which is the processing order determination device 2, acquires the information on the plurality of tool setups used for bending of a component, and determines the setup change order of the plurality of tool setups based on the tool change time between the respective tool setups. Then, the processing order determination method determines the processing order based on the determined setup change order.

According to this method, it is possible to determine a processing order of a series of bending processes using a plurality of tool setups in consideration of tool change time between the respective tool setups. As a result, the processing order can be optimized, and the efficiency of the entire processing work can be improved.

For example, as shown in Figure 5, it is assumed that the processing order is determined according to the setup number. First, in a setup change from the initial arrangement to the setup number A, it is necessary to add the two tools D1 and D2. In a setup change from the setup number A to the setup number B, it is necessary to add the two tools D3 and D4. In a setup change from the setup number B to the setup number C, it is necessary to move the one tool D4. In a setup change from the setup number C to the setup number D, it is necessary to exclude the two tools D3 and D4 and to add the one tool D5. In a setup change from the setup number D to the setup number E, it is necessary to move the two tools D2 and D5, to add the two tools D3 and D4, and to add the one tool D6. Further, in a setup change from the setup number E to the final arrangement, it is necessary to exclude the six tools D1 to D6.

In the case of this processing order, an action is included in which the two tools D3 and D4, which has been excluded in the setup change from the setup number C to the setup number D, are added again in the setup change from the setup number D to the setup number E. Further, since the maximum number of tools, which are D1 to D6, exist in the setup number E, a multitude of actions are required when the setup is changed to the final arrangement. These actions are not efficient.

On the other hand, in the example shown in Figure 8, first, in a setup change from the initial arrangement to the setup number A, it is necessary to add the two tools D1 and D2. In a setup change from the setup number A to the setup number C, it is necessary to add the two tools D3 and D4. In a setup change from the setup number C to the setup number B, it is necessary to move the one tool D4. In a setup change from the setup number B to the setup number E, it is necessary to move the three tools D2 to D4 and to add the two tools D5 and D6. In a setup change from the setup number E to the setup number D, it is necessary to move the one tool D2, to exclude the two tools D3 and D4, to move the one tool D5, and to exclude the one tool D6. Further, in a setup change of the setup number D to the final arrangement, it is necessary to exclude the three tools D1, D2, and D5.

In this processing order, there is no action of excluding the two tools D3 and D4 and then adding them, which allows the setup change to be performed efficiently. Further, the setup number E includes the largest number of tools. Since the setup change is performed from the setup number B, which includes the second largest number of tools after the setup number E, to the setup number E, processing (setup change) can be performed efficiently. Further, the number of tools can be reduced stepwise by performing the setup changes in the order of the setup number E, the setup number D, and the final arrangement. Therefore, the number of actions is reduced at the time when the setup is changed from the setup number D to the final arrangement, and bending (setup change) can be performed efficiently. As a result, the efficiency of the entire processing work can be improved. Particularly, in a processing work in which a plurality of components are sequentially bent, the processing order can be determined from a viewpoint of shortening the tool change time because the processing order can be freely switched.

Further, in the processing order determination method according to the present embodiment, the computer determines the setup change order such that the total of the tool change time required for all the setup changes is shortened.

According to this method, it is possible to determine the setup change order such that the total of the tool change time is shortened throughout the series of bending processes. Therefore, the time required for the entire processing work can be shortened.

Further, in the processing order determination method according to the present embodiment, the plurality of tool setups are created such that the number of tools and the number of tool setups to be used are reduced based on the information on the plurality of tools in possession of the bending machine and the information of the component.

According to this method, it is possible to optimize the setup change order on the premise of a small number of tools and a small number of tool setups. As a result, the time required for the entire processing work can be further shortened.

### (Second Embodiment)

Hereinafter, a processing order determination method and a processing order determination device according to a second embodiment will be described. The processing order determination method and the processing order determination device according to the second embodiment are different from those of the first embodiment in that a constraint condition is set in determining the setup change order. It should be noted that the description of a configuration overlapping with that of the first embodiment will be omitted, and the description will be focused on the differences therebetween.

In the first embodiment, it is assumed that there is no tool in the initial arrangement and the final arrangement. This is because when the operation of the bending machine 10 is stopped, the bending machine 10 is usually in a state in which the tool is removed. However, sometimes there is a case where a processing work is performed by using a plurality of components for a certain product (a first product) as one unit of work, and then another processing work is performed by using a plurality of components for another product (a second product) as one unit of work. In this case, the setup change to a tool setup used for the first component of the second product may be performed more efficiently if a tool setup used for the last component of the first product is left compared with a state in which no tool is left. For this reason, it is preferable that the initial arrangement or the final arrangement can be specified not as always without a tool but as with a specific tool setup.

Further, in the above embodiment, it is assumed that a process for one component is performed by one tool setup, but the process for the one component (which is, for example, referred to a "first component") may be performed over a plurality of tool setups. If the setup change order is determined simply based on the tool change time, continuous orders may not be given to the plurality of tool setups required for processing the first component. In this case, a place for storing the first component is required while a component other than the first component is processed. For this reason, it is preferable that specific tool setups can be inseparably carried out as a group.

In the present embodiment, the setup information acquisition unit 20b acquires information on a constraint condition that specifies a rule for the setup change of the specific tool setup. The information on the constraint condition is input to the processing order determination device 2 by, for example, the user operating the input device 23. The setup information acquisition unit 20b acquires the information on the constraint condition from the information that is input from the input device 23.

Here, the rule for the setup change includes a specification of the specific tool setup for the initial arrangement or the final arrangement, a specification of the order of two or more tool setups, or a specification of the grouping of two or more tool setups. The grouping means two or more tool setups that require to be performed in continuous order.

The order calculation unit 20c determines the setup change order based on the tool change time between the respective tool setups and the constraint condition.

Hereinafter, the procedure for determining the processing order by the processing order determination device 2 will be described with reference to Figure 9. The procedure for determining the processing order is started when the user operates the input device 23 to execute a corresponding function.

First, in step S20, the setup information acquisition unit 20b acquires information on the tool setup. In the description below, it is assumed that five tool setups from a setup number A to a setup number E are created for three components (see Figure 10). Further, it is assumed that one component from among these three components needs to be continuously bent in the order of the setup number A, the setup number B, and the setup number C.

In step S21, the setup information acquisition unit 20b acquires information on a constraint condition. In the description below, the constraint condition is that a process (setup change) is performed on the three tool setups of the setup number A, the setup number B, and the setup number C in the order of the setup number A, the setup number B, and the setup number C.

In steps S22 and S23, the order calculation unit 20c provisionally calculates tool change time between the respective tool setups, and determines a setup change order of the five tool setups based on the tool change time between the respective tool setups. In the present embodiment, the order calculation unit 20c determines the setup change order such that a total of the tool change time required for all the setup changes is shortened, and the setup changes are performed on the setup numbers A, the setup numbers B, and the setup numbers C in this order.

It should be noted that the processing of steps S22 and S23 is the same as the processing of steps S11 and S12 shown in the first embodiment. However, due to the constraint condition imposed, the order calculation unit 20c determines the setup change order within a limited number of combinations (shown by arrows), as shown in Figure 10.

In step S24 of Figure 9, the order calculation unit 20c determines whether or not the ordering of the setup changes has been completed for all the tool setups. If the ordering is completed, an affirmative determination is made in step S24, and the process proceeds to step S25. On the other hand, if the ordering has not been completed, a negative determination is made in step S24, and the process returns to step S22. Then, the order calculation unit 20c repeats the processing of steps S22 to S24 for the tool setup for which the setup change order has not been determined.

In step S25 of Figure 4, the processing order determination unit 20d determines the processing order based on the setup change order determined by the order calculation unit 20c.

As described above, in the processing order determination method according to the present embodiment, the computer, which is the processing order determination device 2, acquires the information on the constraint condition that specifies the rule for the setup change of a specific tool setup from among the plurality of tool setups, and determines the setup change order based on the tool change time between the respective tool setups and the constraint condition.

For the user who uses the bending machine, the short processing time may not always result in the optimum processing order. In this regard, in the present embodiment, a rule for the setup change of a specific tool setup can be specified as a constraint condition. As a result, the setup change order can be determined in consideration of the constraint condition, which makes it possible to determine the processing that reflects the user's intention.

It should be noted that the processing order determination device 2 according to the respective embodiments includes technical matters corresponding to the above processing order determination method, and has the same operation and effect as those of the processing order determination method.

The present disclosure is not limited to the respective embodiments described above, and various changes can be made without departing from the scope of the appended claims.

For example, in the respective embodiments described above, the series of bending processes is performed on the plurality of components by using the plurality of tool setups. However, even when a single component that uses a plurality of tool setups is bent, any constraint may not be required in the processing order. In this case, the processing order determination method according to the present embodiment can be applied in determining the processing order thereof.

## Claims

1. A processing order determination method for performing a series of bending processes on a component using a plurality of tool setups, the bending processes being performed by using a bending machine (10) in which one or more tool stages are set according to a tool setup created in advance and such that the number of tools and the number of tool setups to be used are reduced based on information on a plurality of tools in possession of the bending machine (10) and information of the component,
performing the series of bending processes with the determined processing order on the plurality of components by using the plurality of tool setups and a setup change in which the tool setup is changed by changing the tools, the method comprising, by a computer (2):
acquiring (S10, S20) the information on a plurality of tool setups to be used for bending a component;
acquiring, from a user, information on a constraint condition that specifies a rule for the setup change of the specific tool,
whereby the rule for the setup change includes a specification of a grouping of two or more tool setups,
whereby grouping means two or more tool setups that require to be performed in continuous order,
determining (S12, S23) a setup change order of the plurality of tool setups based on tool change time between the respective tool setups and on the constraint condition; and
determining (S14, S25) a processing order of performing a series of bending processes based on the determined setup change order.

2. The processing order determination method according to Claim 1, further comprising, by the computer (2),
obtaining (S11, S22) a movement distance of the tool by a distance from a storage position of the tool to a mounting position of the tool in the bending machine;
obtaining (S11, S22) a moving speed of the tool by a moving speed of a finger that performs the tool change; and
calculating (S11, S22) the tool change time based on the moving distance of the tool and the moving speed of the tool.

3. The processing order determination method according to Claim 1, wherein
the constraint condition includes a specification of the specific tool setup for an initial arrangement or a final arrangement in which the setup change order is determined for the plurality of tool setups from the initial arrangement to the final arrangement, or a specification of the order of two or more tool setups.

4. The processing order determination method according to Claim 1 or 2, further comprising, by the computer (2),
determining (S12, S23) the setup change order such that a total of the tool change time required for all the setup changes is shortened.

5. The processing order determination method according to any one of Claim 1 to 3, wherein the plurality of tool setups to be used for bending the component are created in advance such that the number of tools and the number of tool setups to be used are reduced based on
information on a plurality of tools in possession of a processing machine (10) and information of the component.

6. A bending system comprising a processing order determination device (2) for performing a series of bending processes on a component using a plurality of tool setups and a bending machine (10) in which one or more tool stages are set according to a tool setup created in advance and such that the number of tools and the number of tool setups to be used are reduced based on information on a plurality of tools in possession of the bending machine (10) and information of the component, the bending machine being adapted to perform the series of bending processes with the determined processing order on the plurality of components by using the plurality of tool setups and a setup change in which the tool setup is changed by changing the tools, the processing order determination device (2)
comprising:
a setup information acquisition unit (20b) configured to acquire the information on a plurality of tool setups to be used for bending a component and to acquire, from a user, information on a constraint condition that specifies a rule for the setup change of the specific tool,
whereby the rule for the setup change includes a specification of a grouping of two or more tool setups,
whereby grouping means two or more tool setups that require to be performed in continuous order,;
an order calculation unit (20c) configured to determine a setup change order of the plurality of tool setups based on tool change time between the respective tool setups and on the constraint condition; and
a processing order determination unit (20d) configured to determine a processing order of performing a series of bending processes based on the determined setup change order.

## Patentansprüche

1. Verfahren für Bestimmung einer Bearbeitungs-Reihenfolge, mit dem eine Reihe von Biegevorgängen an einem Bauteil unter Verwendung einer Vielzahl von Werkzeug-Einstellungen durchgeführt wird, wobei die Biegevorgänge unter Einsatz einer Biegemaschine (10) durchgeführt werden, in der eine oder mehrere Werkzeugstufe/n gemäß einer Werkzeug-Einstellung eingestellt werden, die im Voraus so erstellt wird, dass die Anzahl von Werkzeugen und die Anzahl der zu verwendenden Werkzeug-Einstellungen auf Basis von Informationen über eine Vielzahl von Werkzeugen, über die die Biegemaschine (10) verfügt, sowie von Informationen über das Bauteil reduziert werden,
Durchführen der Reihe von Biegevorgängen mit der bestimmten Bearbeitungs-Reihenfolge an der Vielzahl von Bauteilen unter Verwendung der Vielzahl von Werkzeug-Einstellungen und einer Änderung der Einstellung, bei der die Werkzeug-Einstellung durch Wechseln der Werkzeuge geändert wird, wobei das Verfahren folgende, von einem Computer (2) ausgeführte Schritte umfasst:
Beziehen (S10, S20) der Informationen über eine Vielzahl zum Biegen eines Bauteils zu verwendender Werkzeug-Einstellungen;
Beziehen von Informationen über eine Einschränkungs-Bedingung, die eine Regel für die Änderung der Einstellung des vorgegebenen Werkzeugs vorgibt, von einem Benutzer,
wobei die Regel für die Änderung der Einstellung eine Vorgabe einer Gruppierung von zwei oder mehr Werkzeug-Einstellungen enthält,
und dabei unter Gruppierung zwei oder mehr Werkzeug-Einstellungen zu verstehen sind, die in fortlaufender Reihenfolge durchzuführen sind,
Bestimmen (S12, S23) einer Reihenfolge der Änderung der Einstellung der Vielzahl von Werkzeug-Einstellungen auf Basis von Zeit für Werkzeugwechsel zwischen den jeweiligen Werkzeug-Einstellungen und der Einschränkungs-Bedingung; sowie
Bestimmen (S14, S25) einer Bearbeitungs-Reihenfolge zum Durchführen einer Reihe von Biegevorgängen auf Basis der bestimmten Reihenfolge der Änderung der Einstellung.

2. Verfahren für Bestimmung einer Bearbeitungs-Reihenfolge nach Anspruch 1, das des Weiteren folgende, von dem Computer (2) ausgeführte Schritte umfasst:
Ermitteln (S11, S22) einer Bewegungsstrecke des Werkzeugs anhand einer Strecke von einer Aufbewahrungsposition des Werkzeugs zu einer Montageposition des Werkzeugs in der Biegemaschine;
Ermitteln (S11, S22) einer Bewegungsgeschwindigkeit des Werkzeugs anhand einer Bewegungsgeschwindigkeit eines Fingers, der den Werkzeugwechsel durchführt; und
Berechnen (S11, S22) der Zeit für Werkzeugwechsel auf Basis der Bewegungsstrecke des Werkzeugs sowie der Bewegungsgeschwindigkeit des Werkzeugs.

3. Verfahren für Bestimmung einer Bearbeitungs-Reihenfolge nach Anspruch 1, wobei die Einschränkungs-Bedingung eine Vorgabe für die vorgegebene Werkzeug-Einstellung für eine anfängliche Anordnung oder eine abschließende Anordnung, bei der die Reihenfolge der Änderung der Einstellung für die Vielzahl von Werkzeug-Einstellungen von der anfänglichen Anordnung bis zu der abschließenden Anordnung bestimmt wird, oder eine Vorgabe der Reihenfolge von zwei oder mehr Werkzeug-Einstellungen einschließt.

4. Verfahren für Bestimmung einer Bearbeitungs-Reihenfolge nach Anspruch 1 oder 2, das des Weiteren folgende, von dem Computer (2) ausgeführte Schritte umfasst:
Bestimmen (S12, S23) der Reihenfolge der Änderung der Einstellung, so dass eine Gesamtzeit für Werkzeugwechsel verkürzt wird, die für alle der Änderungen der Einstellung erforderlich ist.

5. Verfahren für Bestimmung einer Bearbeitungs-Reihenfolge nach einem der Ansprüche 1 bis 3, wobei die Vielzahl von zum Biegen des Bauteils zu verwendenden Werkzeug-Einstellungen im Voraus so erstellt werden, dass die Anzahl von Werkzeugen und die Anzahl zu verwendender Werkzeug-Einstellungen anhand von Informationen über eine Vielzahl von Werkzeugen, über die die Bearbeitungsmaschine (10) verfügt sowie Informationen über das Bauteil reduziert werden.

6. Biegesystem, das eine Vorrichtung (2) für Bestimmung einer Bearbeitungs-Reihenfolge, mit der eine Reihe von Biegevorgängen an einem Bauteil unter Verwendung einer Vielzahl von Werkzeug-Einstellungen durchgeführt wird sowie eine Biegemaschine (10) umfasst, in der eine oder mehrere Werkzeugstufe/n gemäß einer Werkzeug-Einstellung eingestellt werden, die im Voraus so erstellt wird, dass die Anzahl von Werkzeugen und die Anzahl der zu verwendenden Werkzeug-Einstellungen auf Basis von Informationen über eine Vielzahl von Werkzeugen, über die die Biegemaschine (10) verfügt, sowie von Informationen über das Bauteil reduziert werden, wobei die Biegemaschine so eingerichtet ist, dass sie die Reihe von Biegevorgängen mit der bestimmten Bearbeitungs-Reihenfolge an der Vielzahl von Bauteilen unter Verwendung der Vielzahl von Werkzeug-Einstellungen und eine Änderung der Einstellung durchführt, bei der die Werkzeug-Einstellung durch Wechseln der Werkzeuge geändert wird, und die Vorrichtung (2) für Bestimmung einer Bearbeitungs-Reihenfolge umfasst:
eine Einheit (20b) für Beziehung von Einstellungs-Informationen, die so konfiguriert ist, dass sie die Informationen über eine Vielzahl von Werkzeug-Einstellungen bezieht, die zum Biegen eines Bauteils verwendet werden sollen, und dass sie von einem Benutzer Informationen über eine Einschränkungs-Bedingung bezieht, die eine Regel für die Änderung der Einstellung des vorgegebenen Werkzeugs vorgibt,
wobei die Regel für die Änderung der Einstellung eine Vorgabe einer Gruppierung von zwei oder mehr Werkzeug-Einstellungen enthält,
und dabei unter Gruppierung zwei oder mehr Werkzeug-Einstellungen zu verstehen sind, die in fortlaufender Reihenfolge durchzuführen sind,
eine Einheit (20c) für Berechnung einer Reihenfolge die so konfiguriert ist, dass sie eine Reihenfolge der Änderung der Einstellung der Vielzahl von Werkzeug-Einstellungen auf Basis von Zeit für Werkzeugwechsel zwischen den jeweiligen Werkzeug-Einstellungen und der Einschränkungs-Bedingung berechnet; sowie
eine Einheit (20d) für Bestimmung einer Bearbeitungs-Reihenfolge, die so konfiguriert ist, dass sie eine Bearbeitungs-Reihenfolge zum Durchführen einer Reihe von Biegevorgängen auf Basis der bestimmten Reihenfolge der Änderung der Einstellung bestimmt.

## Revendications

1. Procédé de détermination d'un ordre de traitement pour mettre en oeuvre une série de processus de pliage sur un composant en utilisant une pluralité de configurations d'outillage, les processus de pliage étant mis en oeuvre
en utilisant une presse plieuse (10) dans laquelle un ou plusieurs étages d'outillage sont configurés conformément à une configuration d'outillage créée à l'avance et de telle sorte que le nombre d'outils et le nombre de configurations d'outillage à utiliser soient réduits sur la base d'information sur une pluralité d'outils possédés par la presse plieuse (10) et d'information sur le composant,
en mettant en oeuvre la série de processus de pliage selon l'ordre de traitement déterminé sur la pluralité de composants en utilisant la pluralité de configurations d'outillage et un changement de configuration dans lequel la configuration d'outillage est changée en changeant les outils,
le procédé comprenant, au moyen d'un ordinateur (2) :
l'acquisition (S10, S20) de l'information sur une pluralité de configurations d'outillage à utiliser pour plier un composant ;
l'acquisition, auprès d'un utilisateur, de l'information sur une condition de contrainte qui spécifie une règle pour le changement de configuration de l'outil spécifique,
dans lequel la règle pour le changement de configuration comprend une spécification d'un groupement de deux ou plusieurs configurations d'outillage,
dans lequel le regroupement désigne deux ou plusieurs configurations d'outillage qui doivent être mises en oeuvre selon un ordre continu,
la détermination (S12, S23) d'un ordre de changement de configuration de la pluralité de configurations d'outillage sur la base du temps de changement d'outillage entre les configurations d'outillage respectives et de la condition de contrainte ; et
la détermination (S14, S25) d'un ordre de traitement pour mettre en oeuvre une série de processus de pliage sur la base de l'ordre de changement de configuration déterminé.

2. Procédé de détermination d'un ordre de traitement selon la revendication 1, comprenant en outre, par l'ordinateur (2),
l'obtention (S11, S22) d'une distance de déplacement de l'outil à partir d'une distance depuis une position de stockage de l'outil jusqu'à une position de montage de l'outil dans la presse plieuse ;
l'obtention (S11, S22) d'une vitesse de déplacement de l'outil à partir d'une vitesse de déplacement d'un doigt qui met en oeuvre le changement d'outillage ; et
le calcul (S11, S22) du temps de changement d'outillage sur la base de la distance de déplacement de l'outil et de la vitesse de déplacement de l'outil.

3. Procédé de détermination d'un ordre de traitement selon la revendication 1, dans lequel
la condition de contrainte comprend une spécification de la configuration d'outillage spécifique pour un agencement initial ou un agencement final dans laquelle l'ordre de changement de configuration est déterminé pour la pluralité de configurations d'outillage depuis l'agencement initial jusqu'à l'agencement final, ou une spécification de l'ordre de deux ou plusieurs configurations d'outillage.

4. Procédé de détermination d'un ordre de traitement selon la revendication 1 ou 2, comprenant en outre, par l'ordinateur (2),
la détermination (S12, S23) de l'ordre de changement de configuration de telle sorte que le temps total de changement d'outillage requis pour tous les changements de configuration soit réduit.

5. Procédé de détermination d'un ordre de traitement selon l'une quelconque des revendications 1 à 3, dans lequel les configurations de la pluralité de configurations d'outillage à utiliser pour plier le composant sont créées à l'avance de telle sorte que le nombre d'outils et le nombre de configurations d'outillage à utiliser soient réduits, sur la base d'information sur une pluralité d'outils possédés par une machine de traitement (10) et d'information sur le composant.

6. Système de pliage comprenant un dispositif de détermination d'un ordre de traitement (2) pour mettre en oeuvre une série de processus de pliage sur un composant à l'aide d'une pluralité de configurations d'outillage, et une presse plieuse (10) dans laquelle un ou plusieurs étages d'outillage sont configurés conformément à une configuration d'outillage créée à l'avance et de telle sorte que le nombre d'outils et le nombre de configurations d'outillage à utiliser soient réduits, sur la base d'information sur une pluralité d'outils possédés par la presse plieuse (10) et d'information sur le composant, la presse plieuse étant adaptée pour mettre en oeuvre la série de processus de pliage dans l'ordre de traitement déterminé sur la pluralité de composants en utilisant la pluralité de configurations d'outillage et un changement de configuration dans lequel la configuration d'outillage est modifiée en changeant les outils, le dispositif de détermination d'un ordre de traitement (2) comprenant :
une unité d'acquisition d'information de configuration (20b) configurée pour acquérir l'information sur une pluralité de configurations d'outillage à utiliser pour plier un composant et pour acquérir, auprès d'un utilisateur, de l'information sur une condition de contrainte qui spécifie une règle pour le changement de configuration de l'outil spécifique,
dans lequel la règle pour le changement de configuration comprend une spécification d'un groupement de deux ou plusieurs configurations d'outillage,
dans lequel le regroupement désigne deux ou plusieurs configurations d'outillage qui doivent être mises en oeuvre selon un ordre continu ;
une unité de calcul d'ordre (20c) configurée pour déterminer un ordre de changement de configuration de la pluralité de configurations d'outillage sur la base du temps de changement d'outillage entre les configurations d'outillage respectives et de la condition de contrainte ; et
une unité de détermination d'ordre de traitement (20d) configurée pour déterminer un ordre de traitement pour mettre en oeuvre une série de processus de pliage sur la base de l'ordre de changement de configuration déterminé.
